# EUROPEAN PATENT APPLICATION

(11) **EP 4 800 961 A1**
(43) Date of publication of application: **02.09.2026**
(21) Application number: 25160917.8
(22) Date of filing: 28.02.2025
(51) Int. Cl.: H04L 5/00

(54) **METHODS OF DETERMINING OR MEASURING INTERFERENCE CAUSED BY A SENSING SIGNAL IN AN INTEGRATED SENSING AND COMMUNICATION SYSTEM, A USER EQUIPMENT, A BASE STATION, AND A COMPUTER PROGRAM**

(71) Applicant: Vodafone Group Services Limited, Newbury RG14 2FN (GB)
(72) Inventor: BOUKLEY HASAN, Wael, London, W2 6BY (GB)
(74) Representative: Boult Wade Tennant LLP

(57) **Abstract**

A method of a base station determining interference caused by a sensing signal in an Integrated Sensing and Communication, ISAC, system is provided. The method comprises communicating a sensing signal via a first radio resource block. The method further comprises allocating a second radio resource block as a zero-power channel state information reference signal (ZP CSI-RS). The second radio resource block is adjacent to the first radio resource block in one or more of:
frequency,
time frame, and
beam direction.

The method further comprises transmitting from the base station to a User Equipment, UE, an indication that the first radio resource block is a sensing radio resource block and that the second radio resource block is a ZP CSI-RS. The method further comprises receiving, from the UE, a measured level of interference attributed to the sensing signal communicated via the first radio resource block.

## Description

### Field of the invention

The present invention relates to determining interference caused by sensing signals in an Integrated Sensing and Communication (ISAC) system. In particular, the invention relates to interference caused by sensing signals in adjacent radio resource blocks.

### Glossary

ISAC - Integrated Sensing and Communication
MIMO - Multiple-Input Multiple-Output
Al - Artificial Intelligence
ZP-CSI - Zero Power Channel State Information
MU-MIMO - Multi-User MIMO
ZP CSI-RS - Zero-Power Channel State Information Reference Signal
NOMA - Non-Orthogonal Multiple Access
SIC - Successive Interference Cancellation
UE - User Equipment
BS - Base Station
ABS - Advanced Base Station
BTS - Base Transceiver Station
BSS - Basic Service Set
ESS - Extended Service Set
AP - Access Point
NB - Node B (Radio Base Station Receiver)
eNB - Evolved Node B
gNB - Next-Generation Node B
TRP - Transmission and Reception Point
PS - Processing Server
TE - Terminal Equipment
MS - Mobile Station
MT - Mobile Terminal
UT - User Terminal
SS - Subscriber Station
PDA - Personal Digital Assistant
CDMA - Code Division Multiple Access
FDMA - Frequency Division Multiple Access
TDMA - Time Division Multiple Access
OFDMA - Orthogonal Frequency Division Multiple Access
SC-FDMA - Single Carrier Frequency Division Multiple Access
MC-FDMA - Multicarrier Frequency Division Multiple Access
UTRA - Universal Terrestrial Radio Access
GSM - Global System for Mobile Communications
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
CRS - Cell-specific Reference Signal
CSI-RS - Channel State Information Reference Signal
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EEPROM - Electrically Erasable Programmable Read-Only Memory
EPROM - Erasable Programmable Read-Only Memory

### Background

Advanced telecommunications networks may integrate both sensing and communications technologies. Such networks may transmit and receive both signals for sensing and signals for communication from the same base station. For sensing, the network may utilise radar-like signals for the purpose of detecting and tracking nearby objects, for example. For communications, the network may utilise a known communications system, such as a cellular communications system.

Transmission and receipt of signals in networks is typically multiplexed. For example, there may be a series of timeslots available for communication of signals. Each timeslot may then be used to communicate a different signal. For example, a first timeslot may be used to communicate a sensing signal. A second timeslot may be used to transmit a communications signal. A third timeslot may be used to transmit a different communications signal. A fourth timeslot may be used to receive a communications signal, and so on. Additionally or alternatively, multiplexing may be performed in the frequency domain. A general time and/or frequency slot may be referred to as a radio resource allocation.

ISAC technology may simultaneously serve traditional wireless communication services and act as a sensor node (e.g., by providing sensing functionality similar to radar) to provide environmental sensing functionality, such as intruder detection, drone monitoring, meteorological prediction, and the like. ISAC technology may facilitate communication via one or more of: beamforming with MIMO arrays; Al model creation and training; and modulation scheme adaptation. ISAC technology may enable the network to react quickly to the changing needs of its subscribers. The sensing and communication aspects of ISAC technology may each comprise common elements, such as beamforming and phased antenna arrays. ISAC technology may further comprise channel estimation, symbol detection and object detection functionality, wherein these functions are provided by common hardware.

Zero power channel state information (ZP-CSI) is a mechanism used in 3GPP technologies to aid in channel estimation, without interfering with data transmission. ZP-CSI is used in 5G NR and may also be used in 6G and onwards. ZP-CSI is primarily used for interference measurement and mitigation in massive MIMO. ZP-CSI is used by allocating reserved resource elements with no data transmission, so that UEs can measure interference during the reserved resource elements and report back to the base station. ZP-CSI may be used to measure interference from other transmissions (e.g., inter-cell or intra-cell interference). ZP-CSI enables beam management and interference cancellation in multi-user MIMO (MU-MIMO).

In a first step, the base station configures certain resource elements as ZP CSI-RS, meaning these resource elements do not carry data. In a second step, one or more UEs measure the interference during those ZP-CSI resource elements and report back to the base station. In a third step, the base station may use the reported interference measurements to refine scheduling decisions.

It is envisaged that ISAC and ZP-CSI may be integrated at the same base station (for example, in 6G 3GPP Releases). However, there is currently no mechanism for how these systems may be inter-operated efficiently.

### Summary

Against this background, a method of a base station determining interference caused by a sensing signal in an Integrated Sensing and Communication, ISAC, system is provided. The method comprises communicating a sensing signal via a first radio resource block. The method further comprises allocating a second radio resource block as a zero-power channel state information reference signal (ZP CSI-RS). The second radio resource block is adjacent to the first radio resource block in one or more of:
frequency,
time frame, and
beam direction.
The method further comprises transmitting from the base station to a User Equipment, UE, an indication that the first radio resource block is a sensing radio resource block and that the second radio resource block is a ZP CSI-RS. The method further comprises receiving, from the UE, a measured level of interference attributed to the sensing signal communicated via the first radio resource block.

The second radio resource block may be concurrent with the first radio resource block in one or more of:
frequency,
time frame, and
beam direction.

In other words, the ZP CSI-RS block may be in the same frequency band, time slot or beam as the sensing signal and is also adjacent to the sensing signal.

In some examples, the second radio resource block may be concurrent with the first radio resource block in two of:
frequency,
time frame, and
beam direction.

In other words, the ZP CSI-RS block may be in the same frequency band, time slot or beam as the sensing signal for two of these variables and is also adjacent to the sensing signal in the third variable.

The ZP CSI-RS block may be adjacent to the sensing signal in frequency and in the same time frame as the sensing signal. The sensing signal may be communicated with no beamforming (i.e., the sensing signal may not be precoded).

The ZP CSI-RS block may be adjacent to the sensing signal in frequency and may be in the same time frame and beam as the sensing signal.

The ZP CSI-RS block may be in an adjacent time frame to the to the sensing signal and communicated at the same frequency. The sensing signal may be communicated with no beamforming (i.e., the sensing signal may not be precoded).

The ZP CSI-RS block may be in an adjacent time frame to the sensing signal and communicated at the same frequency and in the same beam.

The ZP CSI-RS block may be in an adjacent beam to the sensing signal and communicated at the same frequency and in the same time frame.

In some further examples, the first and second resource blocks may be adjacent in two or three dimensions.

In yet further examples, the sensing signal may not be precoded and may be communicated in the same frequency band and time slot as the ZP CSI-RS. In this example, the sensing signal may be concurrent with the ZP CSI-RS in frequency, time frame, and beam direction (i.e., it is effectively communicated during the ZP CSI-RS radio resource block). The sensing signal may also be adjacent to the ZP CSI-RS in beam direction (as the sensing signal occupies every beam direction). This scenario may be beneficially used in non-orthogonal multiple access (NOMA) technology.

The method may further comprise adapting radio resource scheduling, based on the received measured level of interference.

The method may further comprise adjusting precoding of the sensing signal and/or one or more communication signals, based on the received measured level of interference.

Based on the interference measurement received from the UE (and zero or more other UEs), the base station may adjust:
the sensing precoding/beam signals and/or
the communications precoding/beam signals and/or
the data and sensing scheduling (time and frequency allocation).

The method may further comprise communicating communications signals between the base station and the UE.

The sensing signal may be communicated via a first antenna or antenna array and the communications signals may be communicated via a second antenna or antenna array.

The sensing signal and communications signals may be communicated via the same antenna or antenna array.

The method may further comprise receiving, during the first radio resource block, a received sensing signal. The received sensing signal may comprise a reflection of the transmitted sensing signal via an object of interest. The method may further comprise estimating a physical characteristic of the object of interest (e.g., distance, speed, direction of travel, altitude), based on the received sensing signal.

Communicating the sensing signal via the first radio resource block may comprise precoding the sensing signal and transmitting the sensing signal via a multi-antenna system.

Alternatively, the sensing signal may be uniformly broadcast (omnidirectional).

A method of a User Equipment, UE, measuring interference caused by a sensing signal in an Integrated Sensing and Communication, ISAC, system is also provided. The method comprises determining that a first radio resource block is allocated for communicating a sensing signal and determining a predefined sensing signal corresponding to the first radio resource block. The method further comprises determining that a second radio resource block is allocated as a zero-power channel state information reference signal (ZP CSI-RS). The method further comprises receiving, during the second radio resource block, a received signal, wherein the received signal comprises one or more interference components, wherein a first interference component of the one or more interference components is caused by interference of the predefined sensing signal communicated via the first radio resource block. The method further comprises measuring a level of interference attributed to the first component of the received sensing signal, based on the predefined sensing signal.

Determining a predefined sensing signal corresponding to the first radio resource block may comprise determining the predefined sensing signal ahead of time (not simply by receiving the signal).

The predefined sensing signal corresponding to the first radio resource block may be a predefined sensing signal corresponding to the base station. In some examples, the base station may always use the same sensing signal.

The sensing signal corresponding to the base station may stay the same or may be changed infrequently.

Determining the predefined sensing signal may comprise receiving an indication of the predefined sensing signal when the UE attaches to the base station (joins the base station). In other words, the UE may determine the predefined sensing signal during an attach procedure with the base station. If the predefined sensing signal associated with the base station is changed, the base station may notify the UE of the updated predefined sensing signal.

Measuring a level of interference attributed to the first component of the received sensing signal may comprise cross correlating the received signal with the predefined sensing signal.

Measuring a level of interference attributed to the component of the received sensing signal may comprise isolating the component of the received sensing signal.

Measuring a level of interference attributed to the component of the received sensing signal may comprise performing successive interference cancellation (SIC).

The method may further comprise transmitting the measured level of interference to the base station.

A user equipment, UE, configured to perform any of the methods described above is also provided.

A base station configured to perform any of the methods described above is also provided.

A computer program comprising instructions that, when executed by a processor, cause the processor to perform any of the methods described above is also provided.

### Brief description of the drawings

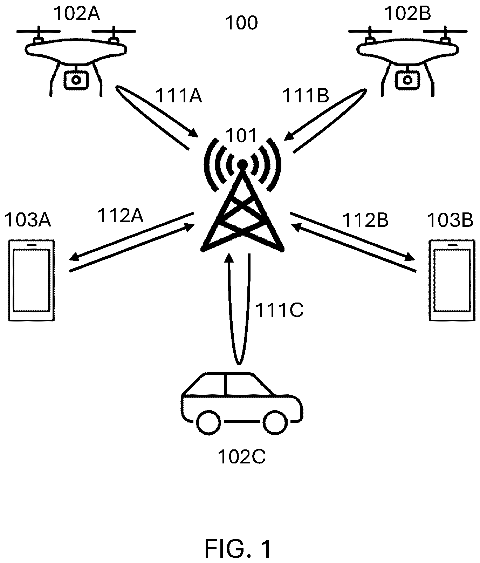

Fig. 1 shows an example telecommunications system.

### Detailed description

Fig. 1 shows an example telecommunications system 100 comprising a base station 101, one or more sensing targets 102A, 102B, 102C, and one or more communications targets or User Equipments (UEs) 103A, 103B. The system further comprises sensing channels 111A, 111B, 111C and communications channels 112A and 112B.

Although channels are depicted as being between the base station 101 and a sensing or communications target, sensing and communications signals communicated along such channels may be received by any of the targets. For example, sensing signals communicated along channels 111A, 111B, and 111C may be received by UEs 103A or 103B. As such, if a sensing signal is sent along a sensing channel simultaneously with a communications signal along a communication channel, for example channel 112A, the receiving UE, for example UE 103A, may not be able to decode the communications signal due to interference from the sensing signal.

Time-domain multiplexing and/or frequency-domain multiplexing may be employed. For example, time axis may be divided into a sequence of time slots and/or the frequency axis may be divided into a sequence of frequency slots.

A transmitter may communicate signals in different directions via beamforming. Each beam may carry a different signal so that each beam is a separate radio resource allocation. Therefore, in some examples, each unique combination of timeslot, frequency and beam constitutes a different radio resource allocation, where all techniques are used (frequency multiplexing, time domain multiplexing, and beamforming). In other examples, one or two of these techniques may be used.

It is an aim for mobile network operators to support new ISAC features while ensuring efficient use of spectrum resources, so that the new sensing functionality may be added while fulfilling the requirements of existing customers. Therefore, adding ISAC sensing capabilities to base stations should not be disadvantageous for existing communication customers. To achieve this, efficient utilization of the available frequency spectrum is needed, so as not to waste limited frequency resources, and without creating interference to the communication signals detrimental to the quality of service of communications services. It is a further goal of mobile network operators that the new sensing functionality is accurate and that a targeted object can be precisely detected.

One way to enable sensing capabilities whilst providing communication services is to send the sensing signals in beams (by precoding the sensing signals) and the communication signals in beams (by precoding the communications signals). The same radio resources (frequency and time) can be used between both features when the beams are not overlapped (i.e., spatially differentiated). Otherwise, different radio resources can be used (different time slot or frequency). By following the precoding/beams approach for sensing and communication signals, the available spectrum may be used efficiently.

One challenge with communicating sensing and communication signals via spatially differentiated beams is how close the beams can be allocated between sensing and communication features, before interference between the beams becomes too high. In order to address this question, it will be useful to determine a level of interference introduced by the sensing feature to a communication signal for a particular UE.

In order to determine interference caused at the UE by a sensing signal, the proposed methods allocate a resource element as an ISAC zero power channel state information (ISAC ZP-CSI) resource element. The proposed methods enable the UE to measure interference, in the absence of any communication signals allocated to the radio resource element. Based on prior knowledge of the sensing signal, the UE can determine how much of the measured interference is attributable to the sensing feature, and report back the interference level caused by the sensing feature to the base station.

In a specific example of the proposed method, the following steps may be performed:

The base station configures one or more resource elements as ISAC ZP CSI-RS.

The sensing and communication signals can be transmitted from the same antenna/antenna array or from different antennas/antenna arrays (i.e., an antenna array may be split into comms/sensing OR may transmit both). If different antenna/antenna arrays are used for transmitting the sensing and communication signals, the ISAC ZP CSI-RS symbols do not carry data. At the same time, the sensing signal will be also transmitted via the other antenna/antenna array (the sensing signal could be precoded or not precoded). If the same antenna/antenna array is used for transmitting the sensing and communication signals, the ISAC ZP CSI-RS symbols carry only the sensing signal.

The UE measures the received sensing signal level. This could be done by cross correlating the received signal with the saved sensing signal at the UE. The UE has prior knowledge of the sensing signal. The BS can send the sensing signal when the UE joins the ISAC BS.

The UE can determine the interference level attributable to the sensing signal. This is in contrast to prior art ZP-CSI techniques, in which the UE measures the combined interferences from all sources, without knowing the source of each interference component (in the prior art, the UE cannot distinguish between sources of interference from a combination of different sources, because the UE does not have any prior knowledge of the signals being transmitted by the interfering sources).

The UE reports the interference level caused by the sensing signal to the base station.

The base station may adjust the sensing precoding/beam signals and/or the communications precoding/beam signals and/or the data and sensing scheduling (time and frequency allocation). The base station may change the precoding technique for sensing and/or may change the scheduling (for the UE and/or for the sensing signal).

The base station may send a regular header to the UE comprising information regarding where to find the resource allocations and what will be communicated in each one (e.g., which is a control channel). In the proposed methods, this header may be modified to indicate to the UE when it can expect to receive a ZP CSI-RS (and so when to monitor the interference).

A number of combinations of the various described embodiments could be envisaged by the skilled person. For example, whilst the disclosure is described in relation to existing network architecture, it will be understood that changes to the architecture (and/or nomenclature) are possible, but the present disclosure may still be applicable in this case. All of the features disclosed herein may be combined in any combination, even if that combination has not been explicitly detailed, except combinations where at least some of such features and/or steps are mutually exclusive. In particular, the preferred features of the invention are applicable to all aspects of the invention and may be used in any combination. Likewise, features described in non-essential combinations may be used separately (not in combination).

A base station (BS) generally refers to a fixed station that performs communication with a UE and/or another BS, and exchanges various kinds of data and control information with the UE and another BS. The BS may be referred to as an advanced base station (ABS), a base transceiver station (BTS), a radio base station, a radio transceiver, a transceiver function, a basic service set (BSS), an extended service set (ESS), an access point (AP), a Node B (NB), an eNode B (eNB), a gNode B (gNB), a transmission and reception point (TRP), a processing server (PS), or some other suitable terminology, depending on the protocol, standard, context or technology. In some examples, a base station may include two or more transceivers that may or may not be collocated. Each transceiver may communicate on the same or different carrier frequency within the same or different frequency band.

Where this application refers to a server or network entity, for instance, this may actually be a pair of servers, or network entities (primary and failover), for redundancy.

Examples of mobile devices include various devices that transmit and receive user data and/or various kinds of control information to and from a base station. The mobile device may be referred to as a user equipment (UE), terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above methods are described in relation to a specific network in some examples, (such as a 6G or 5G/NR network), these methods, techniques, apparatuses, and systems may be applied to a variety of wireless multiple access systems. Examples of the multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems.

A cellular communications system comprises a plurality of cells. A cell refers to a geographical area to which one or more nodes provide a communication service. Accordingly, communicating with a specific cell may mean communicating with an gNB or a node which provides a communication service to the specific cell. Furthermore, channel status/quality of a specific cell refers to channel status/quality of a channel or communication link formed between an gNB or node which provides a communication service to the specific cell and a UE. The UE may measure DL channel state received from a specific node using cell-specific reference signal(s) (CRS(s)) transmitted on a CRS resource and/or channel state information reference signal(s) (CSI-RS(s)) transmitted on a CSI-RS resource, allocated by antenna port(s) of the specific node to the specific node. Meanwhile, a 3GPP system uses the concept of a cell in order to manage radio resources and a cell associated with the radio resources is distinguished from a cell of a geographic region.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Examples may be implemented by computer software or a "computer program." A storage medium and a transmission medium carrying the computer software are also provided. The computer software may comprise one or more instructions, or code, that, when executed by a computer, causes the methods described to be performed. Computer software may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EEPROM, EPROM, Flash memory or a portable/removable memory device), etc. The transmission medium may be a communications signal, a data broadcast, a communications link between two or more computers, etc.

The computer program may be configured to control a network entity and/or mobile device to perform any method according to the disclosure. A network entity of a telecommunications network (e.g., a cellular network) may also be provided, configured to operate in accordance with certain methods disclosed herein. For example, the network entity may include a processor and at least one communication interface, particularly comprising one or both of a transmitter and receiver. A mobile device (e.g., UE) may also be provided, configured to operate in accordance with certain methods disclosed herein. The mobile device may likewise include a processor and at least one communication interface, particularly comprising one or both of a transmitter and receiver.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

The terminology used herein is for the purpose of describing particular embodiments only and is not intended to be limiting of the invention. As used herein, including in the claims, unless the context indicates otherwise, of the terms herein are to be construed as including the plural form and vice versa. For instance, the singular forms 'a', 'an', and 'the' are intended to include the plural forms as well, unless the context clearly indicates otherwise. Therefore, "a base station" and "a user equipment" may be interpreted as "one or more base stations" and "one or more user equipments". It will be further understood that the terms 'comprises', 'comprising', 'includes', and/or 'including' when used herein, specify the presence of stated features, integers, steps, operations, elements, and/or components, but do not preclude the presence or addition of one or more other features, integers, steps, operations, elements, components, and/or groups thereof.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any nonclaimed element as essential to the practice of the invention.

Any steps described in this specification may be performed in any order or simultaneously unless stated or the context requires otherwise. Moreover, where a step is described as being performed after a step, this does not preclude intervening steps being performed.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

Like numbers refer to like elements throughout. Thus, the same or similar numbers may be described with reference to other drawings even if they are neither mentioned nor described in the corresponding drawing. Also, elements that are not denoted by reference numbers may be described with reference to other drawings.

A method of manufacturing and/or operating any of the devices disclosed herein is also provided. The method may comprise steps of providing each of the features disclosed and/or configuring or using the respective feature for its stated function.
In the drawings and specification, there have been disclosed typical embodiments of the invention and, although specific terms are employed, they are used in a generic and descriptive sense only and not for purposes of limitation, the scope of the invention being set forth in the following claims.

## Claims

1. A method of a base station determining interference caused by a sensing signal in an Integrated Sensing and Communication, ISAC, system, wherein the method comprises:
communicating a sensing signal via a first radio resource block;
allocating a second radio resource block as a zero-power channel state information reference signal, ZP CSI-RS, wherein the second radio resource block is adjacent to the first radio resource block in one or more of:
frequency,
time frame, and
beam direction;
transmitting from the base station to a User Equipment, UE, an indication that the first radio resource block is a sensing radio resource block and that the second radio resource block is a ZP CSI-RS; and
receiving, from the UE, a measured level of interference attributed to the sensing signal communicated via the first radio resource block.

2. The method of any preceding claim, wherein the second radio resource block is concurrent with the first radio resource block in one or more of:
frequency,
time frame, and
beam direction.

3. The method of claim 1 or claim 2, further comprising one or more of:
adapting radio resource scheduling, based on the received measured level of interference; and
adjusting precoding of the sensing signal and/or one or more communication signals, based on the received measured level of interference.

4. The method of any preceding claim, further comprising communicating communications signals between the base station and the UE.

5. The method of claim 4, wherein the sensing signal is communicated via a first antenna or antenna array and the communications signals are communicated via a second antenna or antenna array.

6. The method of claim 4, wherein the sensing signal and communications signals are communicated via the same antenna or antenna array.

7. The method of any preceding claim, further comprising
receiving, during the first radio resource block, a received sensing signal, wherein the received sensing signal comprises a reflection of the transmitted sensing signal via an object of interest; and
estimating a physical characteristic of the object of interest, based on the received sensing signal.

8. The method of any preceding claim, wherein communicating the sensing signal via the first radio resource block comprises precoding the sensing signal and transmitting the sensing signal via a multi-antenna system.

9. A method of a User Equipment, UE, measuring interference caused by a sensing signal in an Integrated Sensing and Communication, ISAC, system, wherein the method comprises:
determining that a first radio resource block is allocated for communicating a sensing signal and determining a predefined sensing signal corresponding to the first radio resource block;
determining that a second radio resource block is allocated as a zero-power channel state information reference signal, ZP CSI-RS;
receiving, during the second radio resource block, a received signal, wherein the received signal comprises one or more interference components, wherein a first interference component of the one or more interference components is caused by interference of the predefined sensing signal communicated via the first radio resource block;
measuring a level of interference attributed to the first component of the received sensing signal, based on the predefined sensing signal.

10. The method of claim 9, wherein measuring a level of interference attributed to the first component of the received sensing signal comprises cross correlating the received signal with the predefined sensing signal.

11. The method of claim 9 or claim 10, wherein determining the predefined sensing signal comprises receiving an indication of the predefined sensing signal when the UE attaches to the base station.

12. The method of any of claims 9 to 11, further comprising:
transmitting the measured level of interference to the base station.

13. A user equipment, UE, configured to perform the method of any of claims 6 to 12.

14. A base station configured to perform the method of any of claims 1 to 5.

15. A computer program comprising instructions that, when executed by a processor, cause the processor to perform the method of any of claims 1 to 12.
